# EUROPÄISCHE PATENTSCHRIFT

(11) **EP 3 539 818 B1**
(45) Veröffentlichungstag und Bekanntmachung des Hinweises auf die Patenterteilung: **30.11.2022**
(21) Anmeldenummer: 19162611.8
(22) Anmeldetag: 13.03.2019
(51) Int. Cl.: B60N 2/68, B60R 22/22, B60R 22/24

(54) **GURTGESTELL FÜR EINEN FAHRZEUGSITZ ODER EINE FAHRZEUGSITZBANK UND FAHRZEUG-SITZANORDNUNG**
BELT FRAME FOR A VEHICLE SEAT OR A BENCH SEAT AND VEHICLE SEATING ASSEMBLY
CHÂSSIS CEINTURE POUR SIÈGE DE VÉHICULE OU BANQUETTE DE VÉHICULE ET ENSEMBLE DE SIÈGE DE VÉHICULE

(30) Priorität: 14.03.2018 DE 102018105919
(43) Veröffentlichungstag der Anmeldung: 18.09.2019
(73) Patentinhaber: Aguti Produktentwicklung & Design GmbH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- JP-A- 2010 083 375
- US-A- 2 891 804
- US-A- 4 350 369
- US-A1- 2016 090 015

## Beschreibung

### Stand der Technik

Vorrichtungen zur Anbringung eines Personenrückhaltesystems in einem Verkehrsmittel sind bekannt. Beispielsweise sind sogenannte Gurtgestelle oder Fahrzeugsitzgestelle zur Aufnahme bzw. Anbringung einer Sicherheitsgurtanordnung zur Personensicherung und von Komponenten einer dazugehörigen Personensitzanordnung in einem Verkehrsmittel im Einsatz.

Mit dem Fahrzeugsitzgestell bzw. dem Gurtgestell lässt sich ein Fahrzeugsitz oder eine Fahrzeugsitzbank in einem Fahrzeug bereitstellen. Am Gurtgestell sind Anbringmittel bzw. eine Stützanordnung zur Anbringung des Gurtgestells an einer Fahrzeugstruktur des Fahrzeugs vorhanden, um zumindest einen unteren Endabschnitt des Gurtgestells im Bereich eines Fahrzeugbodens zu fixieren.

In Verkehrsmitteln bzw. Fahrzeugen, beispielsweise Personenkraftwagen, Kleinbussen, Wohnmobilen oder Camping-Mobilen werden Gurtgestelle als eine Baueinheit nach der Herstellung des Fahrzeugs nachträglich eingebaut. Das Gurtgestell mit dem daran vorhandenen Personenrückhaltesystem muss für im Fahrzeug auftretende maximale Belastungssituationen ausgelegt sein, die insbesondere im Zusammenhang mit Unfallszenarien des Fahrzeugs im Straßenverkehr auftreten können.

Bei der Auslegung des Gurtgestells sind neben technischen Kriterien wie insbesondere Sicherheits- bzw.

Stabilitätskriterien auch wirtschaftliche Aspekte bei der Herstellung des Gurtgestells und dessen Einbau- und Nutzsituation zu berücksichtigen.

Bekannte Anordnungen zeigen die US 2 891 804 A, US 4 350 369 A, JP 2010 083375 A, US 2016/0090015 A1 und DE 10 2014 003 966 A1.

### Aufgabe und Vorteile der Erfindung

Aufgabe der vorliegenden Erfindung ist es, eine Vorrichtung der einleitend beschriebenen Art bzw. eine Personensitzanordnung für ein Fahrzeug technisch und wirtschaftlich vorteilhaft bereitzustellen. Insbesondere sollen Stabilitätskriterien sicher und herstellungstechnisch vorteilhaft erfüllbar sein, wobei die Anbindung des Gurtgestells im Fahrzeug an eine vorgegebene Einbausituation im Fahrzeug anpassbar ist.

Diese Aufgabe wird durch den unabhängigen Anspruch 1 gelöst.

In den abhängigen Ansprüchen werden vorteilhafte und zweckmäßige Weiterbildungen der Erfindung aufgezeigt.

Die Erfindung geht aus von einem Gurtgestell für einen Fahrzeugsitz oder eine Fahrzeugsitzbank in einem Fahrzeug, wobei das Gurtgestell Anbringmittel zur Anbringung des Gurtgestells an einer Fahrzeugstruktur des Fahrzeugs im Bereich eines Fahrzeugbodens umfasst, so dass im angebrachten Zustand des Gurtgestells ein unterer Endabschnitt des Gurtgestells im Bereich des Fahrzeugbodens fixierbar ist, wobei das Gurtgestell eine Stützanordnung mit einem Stützorgan zur Abstützung des Gurtgestells an der Fahrzeugstruktur des Fahrzeugs umfasst. Mit der Stützanordnung kann das Gurtgestell neben der Anbindung am Fahrzeugboden an weiteren mechanisch
belastbaren Abschnitten des Fahrzeugs bzw. der Fahrzeugkarosserie befestigt werden. Die Abstützung mit dem Stützorgan erfolgt demgemäß in einem vom Fahrzeugboden zu unterscheidenden Bereich bzw. in einem Bereich der Fahrzeugstruktur, die oberhalb des Fahrzeugbodens vorhanden ist. Die Verbindung mit den Stützstreben stellt eine mechanisch starre Verbindung des Gurtgestells mit der Fahrzeugstruktur dar.

Das Gurtgestell umfasst mehrere, Vertikalstützen, wobei die Vertikalstützen in Längsrichtung vertikal ausgerichtet sind. Die Vertikalstützen sind voneinander lateral bzw. seitlich bzw. horizontal beabstandet vorhanden. Vorzugsweise umfasst das Gurtgestell genau zwei oder genau drei oder genau vier gleichartige vorzugsweise identische Vertikalstützen. Die Vertikalstützen sind jeweils ein längliches Profil und erstrecken sich durchgehend von einem oberen Ende des Gurtgestells bis zu einem unteren Ende des Gurtgestells.

Der untere Endabschnitt des Gurtgestells kann durch ein unteres Ende zumindest einer Vertikalstütze oder sämtlicher Vertikalstützen selbst gebildet sein und/oder durch einen abgewinkelten Abschnitt der Vertikalstützen und/oder ein an den Vertikalstützen zusätzlich vorhandenes Element wie ein horizontal bzw. quer ausgerichtetes Element gebildet sein.

Beispielsweise ist im Fußbereich von zwei oder mehr Vertikalstützen eine Verbindung der Vertikalstützen miteinander vorhanden, z. B. mittels des Elements bzw. einer Querstrebe, über welche eine Fixierung im Bodenbereich des Fahrzeugs bzw. an der Fahrzeugstruktur verbessert einrichtbar ist.

Bevorzugterweise verbindet eine horizontal ausgerichtete längliche Querstrebe die insbesondere parallelen Vertikalstützen miteinander, vorzugsweise in einer vertikalen Höhe, in welcher am mit dem Gurtgestell einrichtbaren Fahrzeugsitz eine Sitzfläche des Fahrzeugsitzes vorhanden ist.

Eine Querstrebe ist vorzugsweise durchgehend ausgebildet und steht bevorzugt an einer oder an den mehreren Vertikalstützen horizontal bzw. seitlich außen über.

Das Gurtgestell ist als ein rahmenartiges Gestell ausgebildet, insbesondere als Einbauvorrichtung ausgebildet, umfassend Freilassungen, die von parallel und winklig zueinander ausgerichteten, miteinander verbundenen, länglichen Profilen wie den Vertikalstützen und der Querstrebe umrahmt sind. Die Profile bestehen vorzugsweise aus einem metallischen Material. Die Profile sind vorzugsweise Einfach- oder Mehrfach-Hohlprofile mit einem zum Beispiel Viereck- oder Rund- oder Oval-Querschnitt.

Das vorgeschlagene Gurtgestell muss konstruktiv bzw. mechanisch so ausgelegt sein, um einer maximalen bzw. möglichen Belastung, insbesondere bei dynamischen Belastungsvorgängen, einen ausreichenden Widerstand entgegensetzen zu können, also entsprechende Kräfte und Momente aufzunehmen und weitergeben zu können.

Das Gurtgestell ist demgemäß so ausgestaltet, eine innere Tragstruktur eines fest im Fahrzeug installierten Personensitzes zu bilden.

Der Kern der Erfindung liegt darin, dass bezogen auf den angebrachten Zustand des Gurtgestells im Fahrzeug das Stützorgan in vertikaler Richtung betrachtet nach oben beabstandet zum unteren Endabschnitt des Gurtgestells am Gurtgestell vorhanden ist, und wobei das Stützorgan am Gurtgestell nach vorne gemäß einer Fahrtrichtung des Fahrzeugs absteht, und das Stützorgan derart ausgebildet ist, dass das Stützorgan im Bereich der Fahrzeugstruktur des Fahrzeugs, welche oberhalb des Fahrzeugbodens vorhanden ist, verbindbar ist. Die Fahrtrichtung bedeutet die Vorwärts-Fahrtrichtung. Die Verbindung erfolgt vorzugsweise mit ausgewählten bzw. gegebenenfalls am Fahrzeug vorbereiteten, hoch belastbaren Stellen an der Fahrzeug- bzw. Karosseriestruktur
Damit kann die Verankerung des Gurtgestells im Fahrzeug besonders stabil und variabel eingerichtet werden. Insbesondere lässt sich mit dem am Gurtgestell nach vorne z. B. auskragenden Stützorgan eine Vielzahl von Bereichen am Fahrzeug zur Verankerung nutzen, welche oberhalb des Fahrzeugbodens existieren. Dies können z. B. Seiten von Innen- und/oder Außenwänden des Fahrzeugs bzw. der Fahrzeugkarosserie bzw. zum Beispiel ein Karosserierahmen oder eine tragende Säule der Fahrzeugkarosserie sein.

Vorzugsweise ist das Stützorgan nicht mit dem Fußboden im Fahrzeug im Verbindungskontakt.

Das Abstehen des Stützorgans nach vorne bedeutet, dass eine mit dem Gurtgestell bereitgestellte Sitzrichtung einer Vorderseite des Gurtgestells zugehörig ist, bezogen auf einen mit dem Gurtgestell herstellbaren Fahrzeugsitz. Der Einbau des Gurtgestells erfolgt derart, dass die Sitzrichtung mit der Fahrtrichtung des betreffenden Fahrzeugs übereinstimmt bzw. die Vorderseite des Gurtgestells in Fahrtrichtung des Fahrzeugs gerichtet ist. An der Vorderseite des Gurtgestells steht bei dem gebildeten Fahrzeugsitz die Sitzfläche nach vorne ab.

Das Stützorgan stellt vorteilhafterweise Anbringmittel am Gurtgestell bereit, um das Gurtgestell an der Fahrzeugstruktur noch besser fixieren zu können. Das Stützorgan ist vorzugsweise oberhalb einer Höhe des Gurtgestells vorhanden, in welcher eine Sitzfläche des mit dem Gurtgestell bildbaren Fahrzeugsitzes existiert und/oder in einer vertikalen Höhe am oberen Ende des eingebauten Gurtgestells.

Das Stützorgan ist derart gestaltet, dass mit dem Stützorgan eine unlösbar oder vorzugsweise eine lösbare Verbindung mit der Fahrzeugstruktur oberhalb des Fahrzeugbodens möglich ist. Das Stützorgan kann beispielsweise durch Anschweißen und/oder Anschrauben oberhalb des Fahrzeugbodens befestigt werden. Vorteilhafterweise ist das Gurtgestell damit zusätzlich zur Fußboden-Verankerung an einer weiteren Struktur insbesondere einer mechanisch hochbelastbaren Fahrzeugstruktur des Fahrzeugs fixierbar. Das Stützorgan ist ausgebildet, eine flächige Verbindung mit der Fahrzeugstruktur einzugehen und gegebenenfalls zusätzlich eine punktuelle bzw. linienförmige Verbindung.

Ein Personen-Rückhaltesystem ist vorteilhafterweise als eine Sicherheitsgurtanordnung, z. B. als ein Mehrpunktgurt-Sicherheitssystem wie ein Dreipunktgurt-Sicherheitssystem ausgebildet. Am Gurtgestell ist vorzugsweise eine Komponente des Personen-Rückhaltesystems anbringbar. Eine derartige Komponente ist z. B. als ein Gurtaufroller, eine Gurtumlenkanordnung zur Richtungsänderung des daran vorbeigeführten Gurts, eine Fixierung eines Gurtendes oder als ein Gurtschloss, an dem ein Einsteckteil lösbar einrastbar ist, mit welchem der Gurt als Schlaufe ausziehbar ist, vorhanden.

Bei einem typischen erfindungsgemäßem Gurtgestell im Einbauzustand mit beispielsweise zwei oder drei senkrecht im Fahrzeug stehenden Vertikalstützen und einer horizontal gerichteten Querstrebe beträgt die Länge der Vertikalstützen bzw. die Höhe des Gurtgestells im montierten Zustand etwa 1,1 Meter bis ca. 1,3 Meter, wobei die Vertikalstützten, insbesondere die beiden äußeren Vertikalstützen, über einen Abstand von z.B. ca. 0,3 bis 0,4 Meter voneinander seitlich beabstandet vorhanden sind. Eine Länge der Querstrebe liegt bevorzugterweise bei ca. 0,7 bis 0,9 Meter.

Ein typisches Längen- und/oder Breitenmaß bzw. Seitenmaß des Querschnitts des Hohlprofils beträgt ca. 20 bis 40 Millimeter. Eine Wanddicke des Hohlprofils liegt in der Regel in einem einstelligen Millimeterbereich. Denkbar ist auch, dass das Hohlprofil als ein Mehrfachhohlprofil vorhanden ist.

Das Stützorgan ist vorteilhaft als ein im Wesentlichen starres Bauteil ausgebildet. Damit ist in einem Belastungsfall wie einem Unfallszenario des Fahrzeugs das Gurtgestell bzw. die Fahrzeug-Sitzanordnung gegen eine kritische Verformung stabilisiert. Dies trägt zur Sicherheit der im Fahrzeugsitz sitzenden und mit dem Gurtsystem gesicherten Person bei. Das Stützorgan besteht vorzugsweise aus einem Metall- bzw. Stahlwerkstoff. Bevorzugt ist das Stützorgan an einer seitlich neben dem Gurtgestell vorhandenen Fahrzeugstruktur fixiert. Vorzugsweise ist eine mit der Stützanordnung nutzbare Verbindungs- bzw. Befestigungsstelle der Fahrzeugstruktur zu den Vertikalstützen nach vorne in Fahrtrichtung mit einem wesentlichen versetzt vorhanden, insbesondere mit einem Abstand zu den Vertikalstützen in der Größenordnung einer Fahrzeugsitz- bzw. Sitzflächen-Tiefe.

Weiter ist es von Vorteil, wenn bezogen auf den angebrachten Zustand des Gurtgestells im Fahrzeug die Stützanordnung ein horizontal oder ein geringfügig zur Horizontalen geneigt ausgerichtetes Stützorgan umfasst. Damit wird eine stabile Verbindung und Abstützung des Gurtgestells in Hauptbelastungs- bzw. in Horizontal-Richtung erreicht. Vorzugsweise ist die Stützanordnung bzw. das Stützorgan im Bereich einer Sitzfläche des mit dem Gurtgestell bereitstellbaren Fahrzeugsitzes vorhanden.

Ein anderer Vorteil ist darin zu sehen, dass das Stützorgan als längliches Profilelement ausgebildet ist. Dies ist material- und platzsparend. Vorzugsweise ist das Stützorgan aus einem Flachmaterial oder einem Winkelprofil oder ein Vierkant- oder Rohr- bzw. Rund-Hohlprofil.

Es ist darüber hinaus vorteilhaft, dass die Stützanordnung ein parallel zur Fahrtrichtung ausgerichtetes Stützorgan umfasst. Bevorzugt ist die Längsachse des Stützorgans parallel zur Fahrtrichtung bzw. Fahrzeuglängsachse ausgerichtet. Das Stützorgan steht bevorzugt rechtwinklig oder schräg zur Querstrebe bzw. der Breitenachse des Gurtgestells.

Vorteilhafterweise umfasst die Stützanordnung ein schräg zur Fahrtrichtung ausgerichtetes Stützorgan. Damit lassen sich noch besser Kräfte und Momente aufnehmen und Verformungen im Belastungsfall minimieren. Ein schräges Stützorgan ermöglicht eine erweiterte Abstützung an unterschiedlichen Stellen des Gurtgestells. Vorzugsweise umfasst das Gurtgestell ein parallel zur Fahrtrichtung ausgerichtetes Stützorgan und wenigstens ein schräg zur Fahrtrichtung ausgerichtetes Stützorgan. Die Stützorgane können bevorzugt in einer horizontalen Ebene liegen und zwei Seiten eines Dreiecks bilden. Die dritte Seite des Dreiecks kann z. B. von der Querstrebe des Gurtgestells gebildet sein.

Bei mehreren Stützorganen sind vorzugsweise mehrere bzw. alle Stützorgane gleichartige Profile z. B. als starres längliches Profil gebildet. Das schräg ausgerichtete Stützorgan kann an einem Ende direkt mit der Fahrzeugstruktur verbunden sein bzw. daran befestigt sein und/oder an einem weiteren Stützorgan fest angreifen, wobei das weitere Stützorgan an der Fahrzeugstruktur befestigt ist.

Das Stützorgan steht gemäß der Fahrtrichtung des Fahrzeugs nach vorne ab, womit es sich am Gurtgestell auskragend nach vorne über eine Abstützlänge der Stützanordnung erstreckt. Nach vorne bedeutet, dass sich das Stützorgan in Richtung einer Fahrtrichtung des Fahrzeugs erstreckt, bezogen auf das montierte Gurtgestell. Die Abstützlänge in Fahrtrichtung beträgt vorzugsweise zumindest im Wesentlichen die Tiefe einer Sitzfläche der mit dem Gurtgestell bildbaren Fahrzeug-Sitzanordnung. Damit ist das Stützorgan platzsparend vorhanden, ohne die Bewegungsfreiheit der sitzenden Person einzuengen. Außerdem kann somit das Stützorgan mit einem Haltepunkt der Fahrzeugstruktur verbunden werden, der nach vorne beabstandet zu den Vertikalstützen vorhanden ist.

Die Stützanordnung umfasst ein flächiges Stützorgan. Vorzugsweise ist das Stützorgan ein plattenartiges starres Element. Dies stellt ein kompakt bauendes Bauteil dar, welches insbesondere bei hochkant stehender Ausrichtung in Längsrichtung hochstabil gegen Verformung ist. Das flächige Stützorgan ist mit einer Innenseite einer Fahrzeugwand oder einer tragenden Fahrzeugsäule verbindbar.

Es ist überdies vorteilhaft, dass die Stützanordnung verstellbar an dem Gurtgestell vorhanden ist. Mit der Verstellbarkeit ist die Stützanordnung reversibel von einer am Gurtgestell abstützend wirksamen Stellung in eine Nichtnutzungsstellung des Stützorgans bringbar. Die Verstellbarkeit ist beispielsweise dann vorteilhaft, wenn man bei Nichtnutzung der Sitzmöglichkeit zum Beispiel von oben auf einen Stauraum unterhalb der Sitzfläche des mit dem Gurtgestell bereitstellbaren Sitzes zugreifen möchte.

Dabei kann die Stützanordnung bzw. das zumindest eine Stützorgan aus einer Wirk- bzw. Nutzstellung wegbewegt werden, zum Beispiel weggeklappt, weggeschwenkt oder weggeschoben werden. Alternativ, kann die Stützanordnung auch reversibel komplett entfernt werden vom Gurtgestell bzw. der Fahrzeugstruktur.

Hierfür sind die Stützorgane z. B. verschraubbar, verrastbar und/oder über eine Gelenkanordnung oder Schiebeanordnung z. B. teleskopierbar aufgenommen an einem Gegenabschnitt am Gurtgestell und/oder der Fahrzeugstruktur.

Das zumindest eine Stützorgan ist beispielsweise um eine horizontale und/oder vertikale und/oder schräge Schwenkachse schwenkbar aufgenommen.

Die Verstellbarkeit des Stützorgans ist so eingerichtet, dass in der Nutzstellung des Stützorgans eine versehentliche bzw. ungewünschte Verstellung sicher unterbunden ist, zum Beispiel mittels einer Sicherungsanordnung.

Die Erfindung erstreckt sich auch auf eine Fahrzeug-Sitzanordnung, wobei ein Fahrzeugsitz oder eine Fahrzeug-Sitzbank mit einem Gurtgestell nach einer der oben genannten Ausbildungen vorhanden ist. Die mit dem Gurtgestell bildbare Fahrzeug-Sitzanordnung, beispielsweise eine Einzel-Fahrzeugsitz oder eine Fahrzeug-Sitzbank weist demgemäß neben dem Personenrückhaltesystem eine Sitzpolsterstruktur mit einer Sitzfläche auf, welche sich an der Vorderseite des Personensitzes bzw. an der Vorderseite des Gurtgestells bzw. der Vorderseite der Vertikalstütze bzw. der Vorderseite der Querstrebe befindet. Die Vorderseite des Gurtgestells ist im eingebauten Zustand im Fahrzeug in Fahrtrichtung ausgerichtet.

Im eingebauten Zustand des Gurtgestells im Fahrzeug entspricht die relevante Belastungsrichtung in der Regel einer Sitzrichtung der gesicherten Person bzw. der Fahrtrichtung des Fahrzeugs. Bei einem Fahrzeug tritt eine maximale Belastung insbesondere bei einem Aufprall des betreffenden Fahrzeugs gegen ein Hindernis auf. Aufgrund der abgebremsten Masse der im Fahrzeug sitzenden und gesicherten Person wird über die Sicherheitsgurte des Personenrückhaltesystems eine ruckartig wirkende Zugkraft bzw. ein daraus resultierendes Moment in der Belastungsrichtung bzw. in Fahrtrichtung F am Gurtgestell wirksam. Diese möglichen Belastungen gilt es bei der Stützanordnung zu berücksichtigen, was mit der vorgeschlagenen Stützanordnung vorteilhaft möglich ist.

Schließlich richtet sich die Erfindung auf ein Fahrzeug mit einer Fahrzeug-Sitzanordnung gemäß der vorgenannten Ausbildung. Das Fahrzeug ist beispielsweise ein Personenkraftwagen, Kleinbus, Wohnmobil oder Camping-Mobil.

### Figurenbeschreibung

Weitere Merkmale und Vorteile der Erfindung sind anhand eines stark schematisiert dargestellten Ausführungsbeispiels der Erfindung dargelegt.

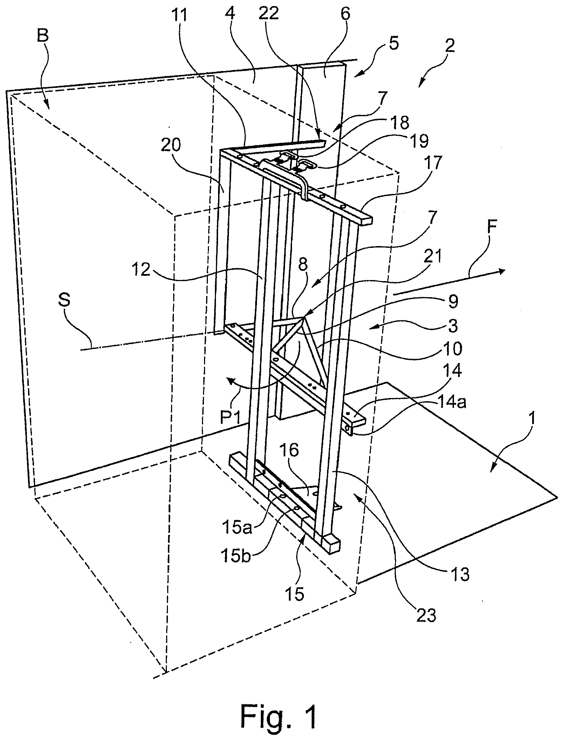

Dabei zeigt die einzige Figur 1 einen Ausschnitt aus dem Inneren eines Fahrzeuges mit einem darin untergebrachten erfindungsgemäßen Gurtgestell 3 in perspektivischer Ansicht schräg von hinten auf das Gurtgestell 3.

In Fig. 1 ist oberhalb eines Fahrzeugbodens 1 in einem Innenbereich 2 des Fahrzeugs das erfindungsgemäße Gurtgestell 3 fest untergebracht. Das Gurtgestell 3 ist mit seinem unteren Endabschnitt am Fahrzeugboden 1 fest verankert, wobei das gezeigte Gurtgestell 3 dazu dient, eine Fahrzeug-Zweier-Sitzbank bereitzustellen, deren Komponenten wie Polster- und Verkleidungselemente und Teile eines Personenrückhaltesystems an dem Gurtgestell 3 anbringbar sind. Das Gurtgestell 3 ist mit seiner Vorderseite in Fahrtrichtung F des Fahrzeugs ausgerichtet. Damit stimmt die Sitzrichtung der mit dem Gurtgestell 3 bereitstellbaren Zweier-Sitzbank des Fahrzeugs mit der Fahrrichtung F überein.

In Fahrtrichtung F links neben dem Gurtgestell 3 schließt sich eine flächige ebene Fahrzeugwand 4 an, welche senkrecht zur vom Fahrzeugboden 1 aufgespannten Ebene ausgerichtet ist.

Innenseitig an der Fahrzeugwand 4 ist eine schematisiert gezeigte Verstärkungsstruktur 5 des Fahrzeugs vorhanden, welche einen mechanisch belastbaren Fahrzeugabschnitt im Fahrzeug bildet, wie z. B. eine tragende Fahrzeugsäule 6, die einen Dachbereich des Fahrzeugs (nicht dargestellt) mit einem Karosserieunterbau umfassend den Fahrzeugboden 1 verbindet.

Die Verstärkungsstruktur 5 ist statisch und dynamisch vergleichsweise stabil und ist vorteilhaft nutzbar zur Abstützung und Verankerung des Gurtgestells 3 mit einer Stützanordnung 7 des Gurtgestells 3. Mit der Stützanordnung 7 erfolgt oberhalb des Fahrzeugbodens 1 eine zusätzliche Fixierung bzw. Abstützung des Gurtgestells 3 und damit der damit bildbaren Zweier-Sitzbank im Fahrzeug bzw. an der Fahrzeugverstärkungsstruktur 5. Die Stützanordnung 7 umfasst im dargestellten Beispiel des erfindungsgemäßen Gurtgestells 3 mehrere Stützorgane, welche als drei vertikal betrachtet mittlere Stützstreben 8, 9 und 10 und eine vertikal obere Stützstrebe 11 ausgebildet sind.

Ein lediglich schematisch angedeuteter und gestrichelt umrandeter, quaderförmiger Bereich B hinter dem Gurtgestell 3 stellt einen umbauten Bereich dar, der zum Beispiel Wandelemente eines Fahrzeugschranks im Inneren des Fahrzeugs bzw. Elemente einer Inneneinrichtung des Fahrzeugs umfasst. Aufgrund des Bereichs B, der mechanisch vergleichsweise weniger belastbar ist, ist eine Abstützung des Gurtgestells 3 nach hinten bzw. rückwärtig zum Gurtgestell 3 nicht ausreichend stabil und nicht praxistauglich möglich.

Daher ist die Stützanordnung 7 mit den am Gurtgestell 3 nach vorne auskragenden bzw. mit den nach vorne in Fahrtrichtung F sich erstreckenden Stützstreben 8 bis 11 vorgesehen.

Grundsätzlich sind auch andere bzw. weitere Stützstreben am Gurtgestell 3 möglich, insbesondere zur Verbindung mit der Verstärkungsstruktur 5 bzw. der Fahrzeugsäule 6. Demgemäß können weitere Stützstreben zum Beispiel auf der Höhe der oberen Stützstrebe 11 ggf. auch zur Horizontalen geneigt vorhanden sein, z. B. entsprechend der Stützstreben 9 und 10 ausgerichtete und vertikal nach oben zu den Stützstreben 9 und 10 versetzte Stützstreben.

Auch nur genau eine der dargestellten Stützstreben 8, 9, 10 oder 11 kann am Gurtgestell 3 vorhanden sein, was der Abstützung des Gurtgestells 3 an der Fahrzeugstruktur dient bzw. eine ausreichend stabile Abstützung bewirkt. Am Gurtgestell 3 können vorteilhaft auch nur genau zwei oder genau drei der dargestellten insgesamt vier Stützstreben 8 bis 11 vorhanden sein zur Abstützung an der Fahrzeugstruktur 5. Die genau zwei oder genau drei Stützstreben können beliebige der vier Stützstreben 8 bis 11 sein, z. B. die Stützstreben 8 und 11, die Stützstreben 9 und 11, die Stützstreben 10 und 11, Stützstreben 8 und 10, Stützstreben 9 und 10 oder z. B. die Stützstreben 8, 10 und 11.

Mit den Stützstreben 9 und 10, welche über die Länge der Querstrebe 14 daran an zwei beabstandeten, von der Fahrzeugsäule 6 entfernte Stellen angreifen, wird vorteilhaft auch eine Versteifung der Querstrebe 14 über deren Länge und damit des Gurtgestells 3 erreicht, was im Belastungsfall vorteilhaft ist.

Das Gurtgestell 3 ist als Rahmenkonstruktion aus mehreren miteinander verbundenen Profilen aufgebaut, beispielsweise aus Vierkant-Hohlprofilen. Das Gurtgestell 3 umfasst zwei vertikale, parallel ausgerichtete und zueinander fluchtende Vertikalstützen 12 und 13, die vertikal etwa auf halber Höhe der Vertikalstützen 12, 13 an diesen vorderseitig angebrachte Querstrebe 14 und eine zur Querstrebe 14 parallele Fußstrebe 15 am unteren Ende der Vertikalstützen 12, 13. Die Querstrebe 14 ist über ein längliches Winkelelement 14a an den Vertikalstützen befestigt. Die Fußstrebe 15 verbindet die Vertikalstützen 12 und 13 miteinander und umfasst eine nach vorne bzw. in Fahrtrichtung F sich erstreckende flache Fußplatte 16, die aufliegend auf der Oberseite des Fahrzeugbodens 1 mit diesem verbunden z. B. verschraubt ist. Weiter weist die Fußstrebe zwei Schraublöcher 15a und 15b auf, durch welche z. B. Schraubmittel zur festen Bodenverankerung bzw. Verschraubung mit dem Fahrzeugboden 1 reichen.

Am oberen Ende der Vertikalstützen 12 und 13 sind diese stabilisiert durch ein weiteres Querelement 17, an dem beidseitig zur Längsmitte des Querelements 17 Gurtösen 18, 19 des ansonsten nicht gezeigten Sicherheitsgurt-Personenrückhaltesystems angebracht sind, zum Beispiel von zwei Dreipunkt-Sicherheitsgurtanordnungen.

Die jeweiligen äußeren, zur Fahrzeugwand 4 gerichteten Enden der Querstrebe 14 und des Querelements 17 sind mit einem aufrecht verlaufenden Flachstab 20 verbunden.

Jede der Stützstreben 8 bis 11 ist einerseits mit einem Endbereich fest am Gurtgestell 3 verbunden und andererseits mit dem anderen Endbereich direkt oder indirekt über die Stützstrebe 8 fest mit der Fahrzeugstruktur 5 bzw. der Fahrzeugsäule 6 stabil bzw. starr verbunden wie zum Beispiel verschraubt, was bei den Stützstreben 8, 9 und 10 über zumindest einen statischen Haltepunkt 21 am Fahrzeug bzw. an der Fahrzeugsäule 6 eingerichtet ist und bei der oberen Stützstrebe 11 über einen weiteren statischen Haltepunkt 22 des Fahrzeugs an der Fahrzeugsäule 6 eingerichtet ist.

Grundsätzlich können mehrere Haltepunkte sowohl an der Stützstrebe 8, 9 oder 10 zur Verbindung mit der Fahrzeugsäule 6 eingerichtet sein, wie auch mehrere statische Haltepunkte z. B. mit mehreren Verschraubungen zwischen der oberen Stützstrebe 11 und der Fahrzeugsäule 6 eingerichtet sein können.

Die Verbindung der Stützstreben 8 bis 11 mit der Fahrzeugsäule 6 kann durch Verschraubung, Verschweißen, Verkleben und/oder anderweitig erfolgen.

Vorzugsweise sind alle oder einzelne Stützstreben der Stützstreben 8-11 verstellbar zum Beispiel wegschwenkbar aus der horizontalen Ausrichtung im Nutzzustand, wie dargestellt, in eine vertikale Ausrichtung (nicht gezeigt) oder auch wegnehmbar an dem Gurtgestell 3 und/oder der Fahrzeugwand 6.

Die gemeinsame Verschwenkbarkeit der miteinander verbundenen Stützstreben 8, 9 und 10 gemäß Schwenkrichtung P1 um eine horizontale Schwenkachse S ist in Fig. 1 angedeutet. Damit lassen sich die Stützstreben 9 und 10 unmittelbar benachbart zur Innenseite der Fahrzeugwand 4 heranklappen. Hierfür müssen die Stützstreben 9 und 10 lösbar z. B. verrastbar mit der Querstrebe 14 verbunden sein.

Damit kann ein Nutzer von oben zum Beispiel an einen Stauraum 23 herankommen, der unterhalb einer Sitzfläche der mit dem Gurtgestell 3 bildbaren Fahrzeug-Sitzbank vorhanden ist.

### Bezugszeichenliste:

- 1: Fahrzeugboden
- 2: Innenbereich
- 3: Gurtgestell
- 4: Fahrzeugwand
- 5: Verstärkungsstruktur
- 6: Fahrzeugsäule
- 7: Stützanordnung
- 8: Stützstrebe
- 9: Stützstrebe
- 10: Stützstrebe
- 11: Stützstrebe
- 12: Vertikalstütze
- 13: Vertikalstütze
- 14: Querstrebe
- 14a: Winkelelement
- 15: Fußstrebe
- 15a: Schraubloch
- 15b: Schraubloch
- 16: Fußplatte
- 17: Querelement
- 18: Gurtöse
- 19: Gurtöse
- 20: Flachstab
- 21: Haltepunkt
- 22: Haltepunkt
- 23: Stauraum

## Patentansprüche

1. Gurtgestell (3) für einen Fahrzeugsitz oder eine Fahrzeugsitzbank in einem Fahrzeug, wobei das Gurtgestell (3) eine innere Tragstruktur des Fahrzeugsitzes oder der Fahrzeugsitzbank bildet, wobei das Gurtgestell (3) Anbringmittel zur Anbringung des Gurtgestells (3) an einer Fahrzeugstruktur des Fahrzeugs im Bereich eines Fahrzeugbodens (1) umfasst, so dass im angebrachten Zustand des Gurtgestells (3) ein unterer Endabschnitt des Gurtgestells (3) im Bereich des Fahrzeugbodens (1) fixierbar ist, wobei das Gurtgestell (3) eine Stützanordnung (7) mit einem Stützorgan (8-11) zur Abstützung des Gurtgestells (3) an der Fahrzeugstruktur des Fahrzeugs umfasst, wobei das Gurtgestell (3) als ein rahmenartiges Gestell ausgebildet ist, umfassend Freilassungen, die von parallel und winklig zueinander ausgerichteten, miteinander verbundenen länglichen Profilen aus Vertikalstützen (12, 13) und einer Querstrebe (14, 15, 17) umrahmt sind, wobei die Vertikalstützen (12, 13) jeweils ein längliches Profil sind und sich durchgehend von einem oberen Ende des Gurtgestells (3) bis zu einem unteren Ende des Gurtgestells (3) erstrecken, wobei bezogen auf den angebrachten Zustand des Gurtgestells (3) im Fahrzeug das Stützorgan (8-11) in vertikaler Richtung betrachtet nach oben beabstandet zum unteren Endabschnitt des Gurtgestells (3) am Gurtgestell (3) vorhanden ist, und wobei das Stützorgan (8-11) am Gurtgestell (3) nach vorne gemäß einer Fahrtrichtung des Fahrzeugs absteht, und das Stützorgan (8-11) derart ausgebildet ist, dass das Stützorgan (8-11) im Bereich der Fahrzeugstruktur des Fahrzeugs, welche oberhalb des Fahrzeugbodens (1) vorhanden ist, verbindbar ist, **dadurch gekennzeichnet, dass** die Stützanordnung ein flächiges Stützorgan umfasst, das mit einer Innenseite einer Fahrzeugwand oder einer tragenden Fahrzeugsäule (6) verbindbar ist.

2. Gurtgestell nach dem Anspruch 1, **dadurch gekennzeichnet, dass** das Stützorgan (8-11) als ein im Wesentlichen starres Bauteil ausgebildet ist.

3. Gurtgestell nach einem der vorangegangenen Ansprüche, **dadurch gekennzeichnet, dass** bezogen auf den angebrachten Zustand des Gurtgestells (3) im Fahrzeug die Stützanordnung (7) ein horizontal oder ein geringfügig zur Horizontalen geneigt ausgerichtetes Stützorgan (8-11) umfasst.

4. Gurtgestell nach einem der vorangegangenen Ansprüche, **dadurch gekennzeichnet, dass** das Stützorgan (8-11) als längliches Profilelement ausgebildet ist.

5. Gurtgestell nach einem der vorangegangenen Ansprüche, **dadurch gekennzeichnet, dass** die Stützanordnung (7) ein parallel zur Fahrtrichtung ausgerichtetes Stützorgan (8, 11) umfasst.

6. Gurtgestell nach einem der vorangegangenen Ansprüche, **dadurch gekennzeichnet, dass** die Stützanordnung (7) ein schräg zur Fahrtrichtung ausgerichtetes Stützorgan (9, 10) umfasst.

7. Gurtgestell nach einem der vorangegangenen Ansprüche, **dadurch gekennzeichnet, dass** die Stützanordnung (7) verstellbar an dem Gurtgestell (3) vorhanden ist.

8. Fahrzeug-Sitzanordnung, wobei ein Fahrzeugsitz oder eine Fahrzeug-Sitzbank mit einem Gurtgestell nach einem der vorangegangen Ansprüche ausgebildet ist.

9. Fahrzeug mit einer Fahrzeug-Sitzanordnung nach Anspruch 8.

## Claims

1. Belt framework (3) for a vehicle seat or a vehicle-seat bench in a vehicle, wherein the belt framework (3) forms an inner load-bearing structure of the vehicle seat or the vehicle-seat bench, wherein the belt framework (3) comprises attachment means for attaching the belt framework (3) to a vehicle structure of the vehicle in the region of a vehicle floor (1) such that, in the attached state of the belt framework (3), a lower end section of the belt framework (3) is fixable in the region of the vehicle floor (1), wherein the belt framework (3) comprises a support arrangement (7) with a support member (8-11) for supporting the belt framework (3) against the vehicle structure of the vehicle, wherein the belt framework (3) is in the form of a structure of frame-like design, comprising openings surrounded by interconnected elongate profiles which are oriented parallel to one another and at an angle to one another and which are made up of vertical supports (12, 13) and a transverse strut (14, 15, 17), wherein the vertical supports (12, 13) are in each case an elongate profile and extend continuously from an upper end of the belt framework (3) as far as a lower end of the belt framework (3), wherein, in relation to the attached state of the belt framework (3) in the vehicle, the support member (8-11) is, as viewed in a vertical direction, present on the framework (3) at a distance above the lower end section of the belt framework (3), and wherein the support member (8-11) projects from the belt framework (3) towards the front according to a direction of travel of the vehicle, and the support member (8-11) is designed in such a way that the support member (8-11) is connectable in the region of the vehicle structure of the vehicle which is present above the vehicle floor (1), **characterized in that** the support arrangement comprises a flat support member which is connectable to an inner side of a vehicle wall or a load-bearing vehicle pillar (6).

2. Belt framework according to Claim 1, **characterized in that** the support member (8-11) is in the form of a substantially rigid component.

3. Belt framework according to either of the preceding claims, **characterized in that**, in relation to the attached state of the belt framework (3) in the vehicle, the support arrangement (7) comprises a support member (8-11) which is oriented horizontally or one which is oriented so as to be slightly inclined to the horizontal.

4. Belt framework according to one of the preceding claims, **characterized in that** the support member (8-11) is in the form of an elongate profile element.

5. Belt framework according to one of the preceding claims, **characterized in that** the support arrangement (7) comprises a support member (8, 11) which is oriented parallel to the direction of travel.

6. Belt framework according to one of the preceding claims, **characterized in that** the support arrangement (7) comprises a support member (9, 10) which is oriented obliquely to the direction of travel.

7. Belt framework according to one of the preceding claims, **characterized in that** the support arrangement (7) is present on the belt framework (3) so as to be adjustable.

8. Vehicle-seat arrangement, wherein a vehicle seat or a vehicle-seat bench is formed with a belt framework according to one of the preceding claims.

9. Vehicle having a vehicle-seat arrangement according to Claim 8.

## Revendications

1. Châssis de ceinture (3) pour un siège de véhicule ou une banquette de véhicule dans un véhicule, le châssis de ceinture (3) formant une structure porteuse intérieure du siège de véhicule ou de la banquette de véhicule, le châssis de ceinture (3) comprenant des moyens de montage pour monter le châssis de ceinture (3) sur une structure de véhicule du véhicule dans la zone d'un plancher de véhicule (1) de telle sorte qu'à l'état monté du châssis' de ceinture (3), une section d'extrémité inférieure du châssis de ceinture (3) peut être fixée dans la zone du plancher de véhicule (1), le châssis de ceinture (3) comprenant un agencement de support (7) avec un organe de support (8-11) pour supporter le châssis de ceinture' (3) sur la structure de véhicule du véhicule, le châssis de ceinture (3) étant réalisé sous la forme d'un châssis en forme de cadre, comprenant des dégagements qui sont encadrés par des profilés allongés reliés entre eux, orientés parallèlement et angulairement les uns par rapport aux autres, constitués de supports verticaux (12, 13) et d'une entretoise transversale (14, 15, 17), les supports verticaux (12, 13) étant chacun un profilé allongé et s'étendant de manière continue depuis une extrémité supérieure du châssis de ceinture (3) jusqu'à une extrémité inférieure du châssis de ceinture (3), l'organe de support (8-11) étant présent sur le châssis de ceinture (3), par rapport à l'état monté du châssis de ceinture (3) dans le véhicule, considéré dans la direction verticale, espacé vers le haut de la section d'extrémité inférieure du châssis de ceinture (3), et l'organe de support (8-11) faisant saillie vers l'avant sur le châssis de ceinture (3) selon une direction de marche du véhicule, et l'organe de support (8-11) étant réalisé de telle sorte que l'organe de support (8-11) peut être relié dans la zone de la structure de véhicule' du véhicule qui est présente au-dessus du plancher de véhicule (1), **caractérisé en ce que** l'agencement de support comprend un organe de support plat qui peut être relié à un côté intérieur d'une paroi de véhicule ou à une colonne de véhicule porteuse (6).

2. Châssis de ceinture selon la revendication 1, **caractérisé en ce que** l'organe de support (8-11) est réalisé sous la forme d'un composant essentiellement rigide.

3. Châssis de ceinture selon l'une quelconque des revendications précédentes, **caractérisé en ce que**, par rapport à l'état monté du châssis de ceinture (3) dans le véhicule, l'agencement de support (7) comprend un organe de support (8-11) orienté horizontalement ou légèrement incliné par rapport à l'horizontale.

4. Châssis de ceinture selon l'une quelconque des revendications précédentes, **caractérisé en ce que** l'organe de support (8-11) est réalisé sous forme d'élément profilé allongé.

5. Châssis de ceinture selon l'une quelconque des revendications précédentes, **caractérisé en ce que** l'agencement de support (7) comprend un organe de support (8, 11) orienté parallèlement à la direction de marche.

6. Châssis de ceinture selon l'une quelconque des revendications précédentes, **caractérisé en ce que** l'agencement de support (7) comprend un organe de support (9, 10) orienté en oblique par rapport à la direction de marche.

7. Châssis de ceinture selon l'une quelconque des revendications précédentes, **caractérisé en ce que** l'agencement de support (7) est présent sous forme réglable sur le châssis de ceinture (3).

8. Agencement de siège de véhicule, un siège de véhicule ou une banquette de véhicule étant réalisé(e) avec un châssis de ceinture selon l'une quelconque des revendications précédentes.

9. Véhicule avec un agencement de siège de véhicule selon la revendication 8.
